Europäisches Patentamt

European Patent Office

Office européen des brevets

(19)

(11) Veröffentlichungsnummer: **0 036 001**
**B1**

(12) **EUROPÄISCHE PATENTSCHRIFT**

(45) Veröffentlichungstag der Patentschrift:
11.05.83

(21) Anmeldenummer: **80901718.9**

(22) Anmeldetag: **11.09.80**

(86) Internationale Anmeldenummer:
**PCT/DE 80/00130**

(87) Internationale Veröffentlichungsnummer:
**WO WO/81008 (02.04.81 Gazettee 81/08)**

(51) Int. Cl.³: **B 61 H 15/00**, F 16 D 65/60,
**B 61 H 1/00**

(54) BREMSEINRICHTUNG FÜR SCHIENENFAHRZEUGE.

(30) Priorität: **19.09.79 DE 2937752**

(43) Veröffentlichungstag der Anmeldung:
23.09.81 Patentblatt 81/38

(45) Bekanntmachung des Hinweises auf die Patenterteilung: **11.05.83 Patentblatt 83/19**

(84) Benannte Vertragsstaaten:
**CH DE FR GB LI SE**

(56) Entgegenhaltungen:
**EP A 0 015 582**
**DE A 2 542 646**
**FR A 2 233 211**

(73) Patentinhaber: **Knorr-Bremse GmbH**
**Moosacher Strasse 80**
**D-8000 München 40 (DE)**

(72) Erfinder: **WOSEGIEN, Bernd**
**Ringseisstrasse 8**
**D-8000 München 2 (DE)**
Erfinder: **STALTMEIR, Josef**
**Dantestrasse 18**
**D-8000 München 19 (DE)**
Erfinder: **SANDER, Nils Börje Lennart**
**Torpslingan 3**
**S-28300 Osby (SE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Bremseinrichtung für Schienenfahrzeuge

Die Erfindung bezieht sich auf eine Bremseinrichtung für Schienenfahrzeuge, mit einer einerseits eines Fahrzeugrades angeordneten Bremseinheit mit einem an die Lauffläche des Fahrzeugrades anpreßbaren, ersten Bremsklotz und einem im wesentlichen vertikal angeordneten, unter einer Reaktionskraft zur Anpreßkraft des Bremsklotzes drehbaren, ersten Bremshebel, dessen unteres Ende gelenkig mit den Enden zweier im wesentlichen horizontal in zur Ebene des Fahrzeugrades parallelen Ebenen verlaufenden, das Fahrzeugrad überkreuzenden und zwischen sich einschließenden Zugstangen angelenkt ist, deren andere Enden am unteren Ende eines bezogen auf das Fahrzeugrad gegenüberliegend zum ersten Bremshebel angeordneten, zweiten Bremshebel angelenkt sind, der mit einem etwa gegenüberliegend zum ersten Bremsklotz an die Lauffläche des Fahrzeugrades anpreßbaren Bremsklotz verbunden ist, mit wenigstens einer die beiden Zugstangen miteinander verbindenden Traverse und mit einer selbsttätigen Nachstellvorrichtung für das Lösespiel der Bremsklötze, die wenigstens eine Verschraubung, umfassend eine Gewindespindel und eine mit dieser verschraubte Mutter, und eine Steuervorrichtung für das Drehen eines der Verschraubungsglieder — Gewindespindel oder Mutter — aufweist.

Eine derartige Bremseinrichtung ist mit der DE-A-25 51 225 bekannt geworden. Bei dieser Bremseinrichtung ist die Nachstellvorrichtung im Verbindungsbereich zwischen dem ersten Bremshebel und den beiden Zugstangen angeordnet, wobei sie im wesentlichen zwischen den beiden Zugstangen oder in deren Verlägerung in einem auf der dem Fahrzeugrad abgewandten Seite des ersten Bremshebels befindlichen Raum zu liegen kommt. Dieser Raum wird jedoch zumeist von anderen Fahrzeugteilen, insbesondere der Bremseinrichtung eines benachbarten Fahrzeugrades, beansprucht ; die Unterbringung eines derartigen Bremsgestänges bereitet daher oftmals große Schwierigkeiten.

Mit der FR-A-1 463 955 ist bereits eine Bremseinrichtung bekanntgeworden, bei welcher die unteren Enden der beiden Bremshebel mittels nur einer das Fahrzeugrad einseitig überkreuzenden Zugstange miteinander verbunden sind. Im übrigen entspricht diese bekannte Bremseinrichtung den eingangs genannten Merkmalen. Die Nachstellvorrichtung ist hierbei in die Zugstange eingebaut und wird von einem nicht dargestellten und nicht beschriebenem Steuergestänge gesteuert. Diese Bremseinrichtung ist jedoch mit dem wesentlichen Mangel behaftet, daß infolge der seitlich versetzten Anordnung von Bremsklötzen und Zugstange starke Dreh- und Biegemomente in den Bremshebeln, deren Verbindung zur Zugstange und in der Zugstange verursacht werden. Zum Vermeiden dieser ungünstigen Gestängebelastungen könnte es naheliegen, ebenso wie bei den vorstehend beschriebenen Bremseinrichtungen zwei beidseitig das Fahrzeugrad überkreuzende Zugstangen vorzusehen, doch wären dann zwei vollständige Nachstellvorrichtungen nötig, welche zudem ungleichmäßigarbeiten können. Diese naheliegende Umgestaltung führt somit zu einer teueren und ungünstige Verspannungen in bestimmten Teilen der Bremseinrichtung nicht ausschließenden Lösung.

Mit der DE-A-25 27 920 ist eine allerdings für den Einbau in Bremszylinder bestimmte Nachstellvorrichtung bekanntgeworden, welche den eingangs genannten Merkmalen für die Nachstellvorrichtung entspricht. Die Verschraubung ist hierbei selbsthemmungsfrei ausgebildet, das drehbare, als Gewindespindel ausgebildete Verschraubungsglied trägt endseitig einen Kupplungsflansch, dem beidseitig an einem undrehbaren Teil angeordnete Kupplungsflächen gegenüberstehen, das drehbare Verschraubungsglied ist in Richtung der zu übertragenden Bremskraft federbelastet und es wirkt nach einem Sollhub mit einem entgegen der Federbelastung wirksamen, federnden Anschlag zusammen und das ander, undrehbare Verschraubungsteil ist in Richtung der zu übertragenden Bremskraft federbelastet.

Der Erfindung liegt die Aufgabe zugrunde, eine Bremseinrichtung der eingangs genannten Art derart auszugestalten, daß durch die Anpresskraft der Bremsklötze an die Radlauffläche keine unerwünschten Verspannungen bzw. Biege- oder Drehkräfte an den einzelnen Teilen bewirkt werden können, daß für die Nachstellvorrichtung auf der dem Fahrzeugrad abgewandten Seite des ersten Bremshebels nur wenig Raum benötigt wird, daß also durch die Nachstellvorrichtung die Unterbringungsmöglichkeit der Bremseinrichtung nicht erschwert oder behindert wird, und daß der Bauaufwand gering gehalten wird.

Diese Aufgabe wird nach der Erfindung dadurch gelöst, daß jede der beiden Zugstangen eine Verschraubung aufweist und daß an der Traverse eine gemeinsame Steuervorrichtung für beide Verschraubungen angeordnet ist. Da nur eine Steuervorrichtung für beide Verschraubungen erforderlich ist, wird der Bauaufwand niedrig gehalten, und zugleich gewährleistet die gemeinsame Steuervorrichtung für beide Verschraubungen deren synchrone Betätigung, so daß die Länge beider Zugstangen stets gleichartig und synchron nachgestellt wird, wodurch eine Ursache für unerwünschte Verspannungen ausgeschlossen ist.

Zur weiteren Sicherung der synchronen Betätigung beider Verschraubungen kann es zweckmäßig sein, wenn die beiden drehbaren Verschraubungsglieder mittels eines an der Traverse angeordneten Getiebes drehfest miteinander gekuppelt sind. Dabei kann nach der weiteren Erfindung das Getriebe je ein mit den drehbaren Verschraubungsgliedern verbundenes Zahnrad und ein mit diesen kämmendes Zwischenzahnrad aufweisen, und die Steuervorrichtung kann mit dem Zwischenzahnrad gekuppelt sein.

Hierbei ergibt sich eine besonders vorteilhafte Ausgestaltung, wenn die beiden Verschraubungen selbsthemmend ausgebildet sind, wenn das Zwischenzahnrad über eine Einwegkupplung mit einer Zwischenwelle gekoppelt ist, und wenn die Zwischenwelle über ein Axialverschiebungen zwischen ihr und einem Bezugsteil in Drehbewegungen der Zwischenwelle umsetzenden Drehantrieb mit dem Bezugsteil gekoppelt ist. Dabei kann nach der weiteren Erfindung entweder die Einwegkupplung oder der Drehantrieb einen dem Sollhub entsprechenden Totgang aufweisen.

Es ist hierbei zweckmäßig, wenn mit der Zwischenwelle über ein selbsthemmungsfreies Gewinde eine drehfest gehaltene, mit dem Bezugsteil gekoppelte Antriebsmutter verschraubt ist, die nach der weiteren Erfindung über einen ein dem Sollhub entsprechendes Spiel aufweisende Anschlagvorrichtung und ein vorgespanntes Federglied mit dem Bezugsteil gekoppelt sein kann.

Zum willkürlichen Vergrößern des Lösehubes beispielsweise beim Austausch verschlissener gegen neue Bremsklötze kann es vorteilhaft sein, wenn die Einwegkupplung lösbar und das Zwischenzahnrad von Hand drehbar ausgebildet ist.

Abweichend zu den vorstehend angeführten, zweckmäßigen Ausgestaltungen der Bremseinrichtung kann diese vorteilhaft auch derart ausgebildet sein, daß sie der Kombination der Merkmale entspricht, daß

a) die Verschraubungen beider Zugstangen, wie insgesamt an sich bekannt, selbsthemmungsfrei ausgebildet sind, das drehbare Verschraubungsglied einen Kupplungsflansch trägt, dem beidseitig an einem undrehbaren Teil angeordnete Kupplungsflächen gegenüberstehen, das drehbare Verschraubungsglied in Richtung der zu übertragenden Bremskraft federbelastet ist und mit einem nach einem Sollhub entgegen der Federbelastung wirksamen, federnden Anschlag zusammenwirkt und das andere, undrehbare Verschraubungsteil in Richtung der zu übertragen Bremskraft federbelastet ist,

b) der federnde Anschlag einen an der Traverse relativverschieblich zu dieser gelagerten Hebel aufweist, dessen Enden mit den drehbaren Verschraubungsteilen beider Zugstangen und dessen mittlerer Bereich über eine vorgespannte Federeinrichtung mit einem Bezugsteil in Eingriff bringbar sind. Durch diese Ausgestaltung wird eine Funktion der auf die beiden Zugstangen und die Traverse aufgegliederten Nachstellvorrichtung ähnlich bisher nur im Zusammenwirken mit Bremszylindern bekannter Nachstellvorrichtungen erreicht, und es ist möglich, diese Nachstellvorrichtung entsprechend den bekannten Nachstellvorrichtungen doppeltwirkend mit während des Anlegehubes oder, bei Wunsch, erst während des nachfolgenden Bremsenlösevorganges ablaufender Nachstellfunktion, oder aber auch einfachwirkend auszugestalten.

Bei einer derartigen Ausgestaltung der Bremseinrichtung kann es zweckmäßig sein, wenn jede der beiden Zugstangen zwei teleskopisch zueinander verschiebliche Rohrglieder aufweist, deren einander abgewandte Enden mit je einer an einem der Bremshebel angelenkten Traverse verbunden sind, wenn das andere Ende des jeweils inneren Rohrgliedes fest mit einer Mutter verbunden ist, wenn die mit den Muttern verschraubten Gewindespindeln einerseits beweglich im inneren Rohrglied geführt sind und andererseits den Kupplungsflansch tragen, wenn die Kupplungsflächen an den Endbereichen der den Hebel aufweisenden Traverse angeordnet sind, und wenn dem Hebel in dessen mittleren Bereich mit dem Sollabstand ein Anschlagglied gegenübersteht, das über die vorgespannte Federeinrichtung am Bezugsteil angelenkt ist. Hierdurch ergibt sich eine kompakte, gut gegen Verschmutzungen schützbare Ausbildung der Bremseinrichtung.

In den Zeichnungen sind unterschiedliche Ausführungsbeispiele der Erfindung schematisch dargestellt, und zwar zeigt

Figur 1 stark schematisiert eine Seitenansicht einer Bremseinrichtung, bei welcher der erste Bremshebel, mit doppelter übersetzung ausgebildet ist,

Figur 2 eine Aufsicht auf die Bremseinrichtung nach Fig. 1 unter Weglassung der Bremshebel,

Figur 3 eine Einzelheit in vergrößertem Maßstab,

Figur 4 eine perspektivische Ansicht der Traverse mit den von dieser ausgehenden Zugstangen,

Figur 5 eine Einzelheit der aufgeschnittenen Bremseinrichtung in einer ersten Ausführungsart und

Figur 6 eine Einzelheit der aufgeschnittenen Bremseinrichtung in einer zweiten Ausführungsform.

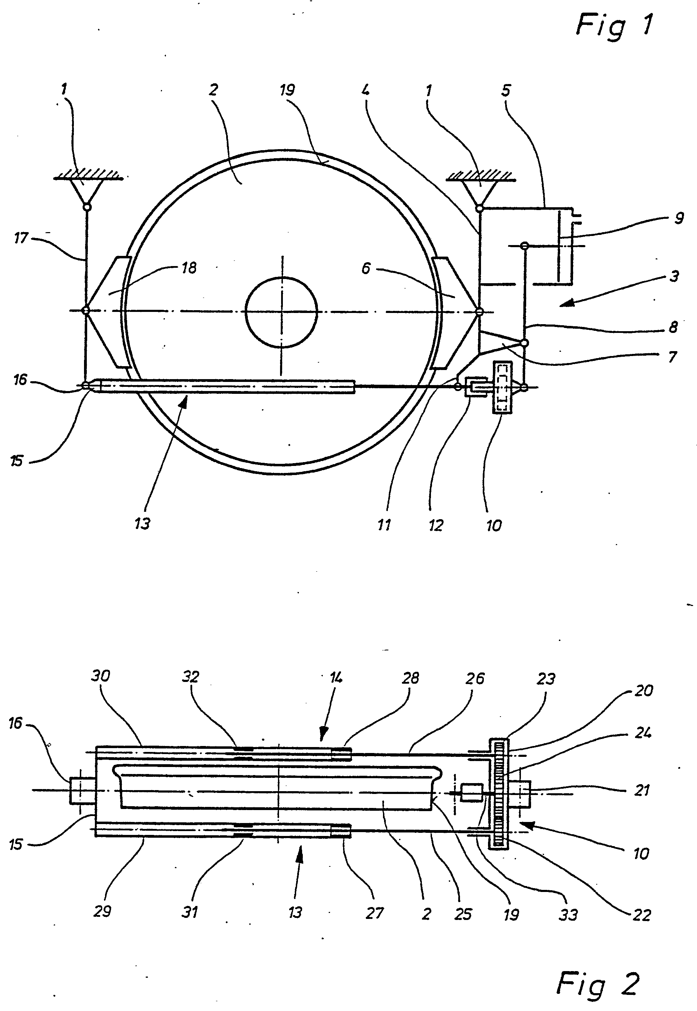

Gemäß Figur 1 ist an einem Fahrzeugrahmen 1 seitlich eines Fahrzeugrades 2 eine insgesamt als erster Bremshebel 3 bezeichnete Bremseinheit in der Ebene des Fahrzeugrades 2 schwenkbar aufgehängt. Der erste Bremshebel 3 entspricht in seiner Ausbildung der erwähnten Patentanmeldung P 28 23 843.9 : Er weist einen im wesentlichensenkrechten Hebel 4 auf, der an seinem oberen Ende am Fahrzeugrahmen 1 schwenkbar angelenkt ist und in diesem Bereich auf der dem Fahrzeugrad 2 abgewandten Seite einen Bremszylinder 5 trägt ; im mittleren Bereich ist am Hebel 4 ein dem Fahrzeugrad 2 zugewandter, erster Bremsklotz 6 und am unteren Ende über einen Lagerbock 7 ein im wesentlichen zum Hebel 4 paralleler Hebel 8 angelenkt. Das obere Ende des Hebels 8 ist am Kolben 9 des Bremszylinders 5, das untere Ende an einer später näher zu beschreibenden Traverse 10 und eine dazwischenliegender, nahe der Traverse 10 befindlicher Bereich am Lagerbock 7 angelenkt. Eine nach unten ragende, als Bezugsteil 11 dienende Verlängerung des Hebels 4 steht über eine Federeinrichtung 12 ebenfalls mit der Traverse 10 in Verbindung. Wie aus Fig. 2 ersichtlich, verläuft die Traverse 10 im wesentlichen parallel zur Achse des Fahrzeugrades 2 ; nahe ihrer seitlichen Enden gehen von ihr zwei Zugstangen 13 und 14 aus, welche horizontal in zur Ebene des Fahrzeugrades 2 parallelen Ebenen verlaufen, derart, daß sie das Fahrzeugrad 2 beiderseits in einem gewissen Abstand überkreuzen. Andererseits sind die beiden Zugstangen 13 und 14 mit einer weiteren Traverse 15 verbunden, welche mittels einer Lagerung 16 am unteren Ende eines zweiten Bremshebels 17 angelenkt ist (Fig. 1). Der Bremshebel 17 verläuft in wesentlichen vertikal, in seinem mittleren Bereich ist, bezogen auf das Fahrzeugrad 2, gegenüberliegend zum ersten Bremsklotz 6 ein zweiter Bremsklotz 18 und das obere Ende des Bremshebels 17 ist am Fahrzeugrahmen 1 angelenkt.

Die insoweit beschriebene Bremseinrichtung arbeitet folgendermaßen :

Bei gelöster Bremse nehmen alle Teile die aus Fig. 1 ersichtlichen Lagen ein, wobei sich die beiden Bremsklötze 6 und 18 in einem bestimmten Sollabstand vor der Lauffläche 19 des Fahrzeugrades 2 befinden. Wird der Bremszylinder 5 mit Druckluft beaufschlagt, so drückt der Kolben 9 das obere Ende des Hebels 8 gemäß Fig. 1 nach links, wodurch der Lagerbock 7 ebenfalls nach links und die Traverse 10 nach rechts mit einem der Teilung des Hebels 8 entsprechenden Übersetzungsverhältnis für die Kräfte gedrückt werden. Über den Lagerbock 7 wird das untere Ende des Hebels 4 nach links gedrückt, wodurch der erste Bremsklotz 6 an die Lauffläche 19 des Fahrzeugrades 2 angelegt und anschließend mit einer nochmals durch das Teilungsverhältnis des Hebels 4 übersetzten Kraft angepresst wird. Der Abstand zwischen dem Bezugsteil 11 und der Traverse 10 vergrößert sich dabei ; die sich gemäß Fig. 1 und Fig. 2 nach rechts bewegende Traverse 10 nimmt über die vorerst als starre Verbindungen anzusehenden Zugstangen 13 und 14 die Traverse 15 und über die Lagerung 16 das untere Ende des zweiten Bremshebels 17 mit, der infolgedessen den zweiten Bremsklotz 18 an die Lauffläche 19 des Fahrzeugrades 2 anlegt und sodann mit einer entsprechend seinem Teilungsverhältnis übersetzten Kraft anpresst. Beim Lösen der Bremse spielen sich entsprechend umgekehrte Vorgänge ab.

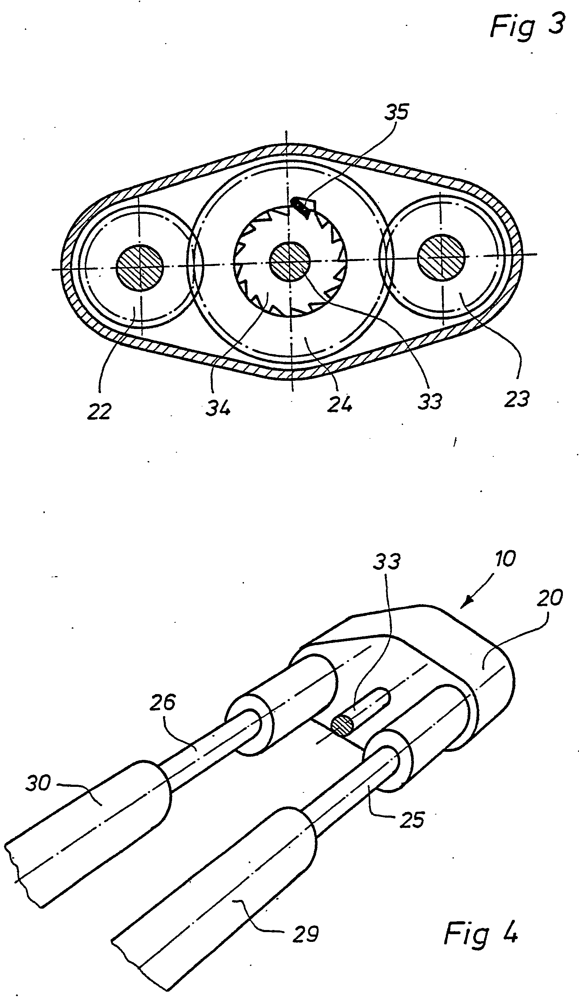

Die Traverse 10 weist gemäß Fig. 2 ein stabiles Gehäuse 20 auf, welches einerseits mittig einen Lagerbock 21 zum Anlenken des Hebels 8 trägt. Nahe der beiden seitlichen Enden sind im Gehäuse 20 zwei Zahnräder 22 und 23 drehbar, aber über in Fig. 2 nicht dargestellte Axiallager axial unverschieblich gelagert. Die beiden Zahnräder 22 und 23 kämmen, wie aus Fig. 2 und 3 ersichtlich, mit einem mittig im Gehäuse 20 drehbar angeordneten Zwischenzahnrad 24. Die beiden Zahnräder 22 und 23 sind mit auf der dem Lagerbock 21 abgewandten Seite aus dem Gehäuse 20 auskragenden Gewindespindeln 25 und 26 starr verbunden, welche Teile die Zugstangen 13 und 14 darstellen und welche über ein selbsthemmendes Gewinde mit Muttern 27, 28 verschraubt sind, welche sich am der Traverse 10 zugewandten Ende von zu den Gewindespindeln 25, 26 gleichachsigen Rohrgliedern 29, 30 befinden. Die ebenfalls den Zugstangen 13 und 14 zugehörenden Rohrglieder 29 und 30 sind an ihren den Muttern 27 und 28 abgewandten Enden starr mit der Traverse 15 verbunden. Die Gewindespindel 25 und 26 stellen somit die drehbaren Verschraubungsglieder und die Muttern 27 und 28 die undrehbaren Verschraubungsglieder zweier den Zugstangen 13 und 14 zugeordneter Verschraubungen 25, 27 bzw. 26, 28 dar. In den Rohrgliedern 29 und 30 sind Lagerungen 31, 32 zur guten Führung und Lagerung der Gewindespindeln 25 und 26 angeordnet. Zwischen den beiden Gewindespindeln 25 und 26 ragt aus dem Gehäuse 20 eine Zwischenwelle 33 heraus, welche gleichachsig zum Zwischenzahnrad 24 angeordnet ist und welche einer Steuervorrichtung mit Drehantrieb für das Zwischenzahnrad 24 zugehört. Zur Verdeutlichung der Anordnung ist in Fig. 4 die Traverse 10 mit dem Gehäuse 20, den Gewindespindeln 25 und 26 sowie den Rohrgliedern 29 und 30 und der Zwischenwelle 33 perspektivisch dargestellt.

Gemäß Fig. 3 ist im Zwischenzahnrad 24 ein Klinkenrad 34 gelagert ; eine am Zwischenzahnrad 24 angeordnete Klinke 35 greift federnd in die Zähne des Klinkenrades 34 ein. Das mit der Zwischenwelle 33 fest verbundene Klinkenrad stellt zusammen mit der Klinke 35 eine Einwegkupplung 34, 35 zwischen der Zwischenwelle 33 und dem Zwischenzahnrad 24 dar ; die Einwegkupplung weist dabei einen Totgang auf, der der Zahnteilung des Klinkenrades entspricht und welcher dem Sollhub, um welchen bei gelöster Bremse die Bremsbacken 6 und 18 von der Lauffläche 19 abgehoben sind, proportional ist.

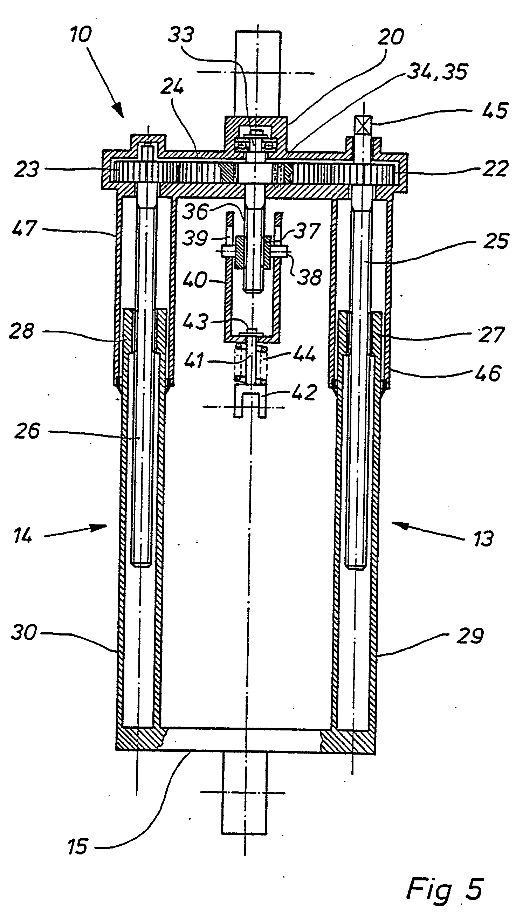

Die Zwischenwelle 33 kann außerhalb des Gehäuses 20 in für Drehantriebe von Nachstelleinrichtungen bekannter Weise eine schraubenförmige Nut aufweisen, in welche ein unmittelbar oder über die Federeinrichtung 12 mit dem Bezugsteil 11 verbundener, zur Zwischenwelle 33 nur axialverschieblich geführter Gleitstein eingreift. Die bereits erwähnten, während des Bremsens auftretenden Relativbewegungen zwischen dem Bezugsteil und der Traverse 10 werden hierdurch in Drehbewegungen der Zwischenwelle 33 umgesetzt ; über die Federeinrichtung 12 kann dabei die maximale Drehung der Zwischenwelle 33 während eines Bremsvorganges ohne Überbeanspruchung irgendwelcher Teile begrenzt werden. Zweckmäßiger ist es jedoch, den Drehantrieb für die Zwischenwelle 33 in der in Fig. 5 dargestellten Art, jedoch mit im wesentlichen gleicher Funktionsweise auszubilden :

Nach Fig. 5 ist das mit den Zahnrädern 22 und 23 kämmende Zwischenzahnrad 24 über eine vorzugsweise spielfrei ausgebildete, auf dem Funktionsprinzip von Klemmkörpern aufgebaute Einwegkupplung 34, 35 mit der Zwischenwelle 33 gekoppelt. Die Zwischenwelle 33 ist drehbar, jedoch axial unverschieblich im Gehäuse 20 der Traverse 10 gelagert und weist an ihrem aus dem Gehäuse 20 herausragenden Abschnitt ein selbsthemmungsfreies Gewinde 36 auf, mit welchem eine Antriebsmutter 37 verschraubt ist. Die Antriebsmutter 37 weist seitlich Zapfen 38 auf, mit welchen sie in Langlächer 39 eines sie umfassenden Gabelteiles 40 eingreift. Das gleichachsig zur Zwischenwelle 33 angeordnete Gabelteil 40 ist an seinem Basisteil mit einem Vierkantloch versehen, in welches verschieblich ein Vierkantbolzen 41 eingreift. Über ein Gabelstück 42 ist der Vierkantbolzen 41 um eine im wesentlichen zur Achse des Fahrzeugrades 2 parallele Achse schwenkbar am Bezugsteil 11 angelenkt. Zwischen das Gabelstück 42 und den Basisabschnitt des Gabelteiles 40 ist eine vorgespannte, durch einen am Gabelteil 40 anliegenden Kopfteil 43 des Vierkantbolzens 41 abgefangene Druckfeder 44 eingespannt. Über das Bezugsteil 11, das Gabelstück 42, den Vierkantbolzen 41, das Gabelteil 40, die Langlöcher 39 und die Zapfen 38 ist die Antriebsmutter 37 somit nur begrenzt axialverschieblich zur Zwischenwelle 33, aber undrehbar geführt. Weiterhin sind in Fig. 5 noch die Zugstangen 13 und 14 mit den Gewindespindeln 25 und 26, den Muttern 27 und 28 und den Rohrgliedern 29 und 30 sowie die Traverse 15 dargestellt.

Bei gelöster Bremse nehmen die Teile die aus Fig. 5 ersichtlichen Lagen ein. Während des Bremsens entfernen sich, wie bereits erwähnt, die Traverse 10 und das Bezugsteil 11 voneinander ; über das Kopfteil 43 des Vierkantbolzens 41 folgt dabei das Gabelteil 40 der Bewegung des Bezugsteiles 11, während die Zwischenwelle 33 der Bewegung der Traverse 10 folgt. Die Antriebsmutter folgt der infolge ihrer Reibungen vorerst undrehbar gehaltenen Zwischenwelle 33, wobei die Zapfen 38 in den Langlöchern 39 entlanggleiten ; bei richtig eingestelltem Lösespiel der Bremseinrichtung gelangen die Zapfen 38 bei maximalem Bremshub gerade zur Anlage an den der Traverse 10 zugewandten Enden der Langlöcher 39. Während des Lösens der Bremse ergeben sich entsprechend umgekehrte Verschiebungen der einzelnen Teile.

Falls jedoch, beispielsweise infolge eines Verschleißes der Bremsklötze 16 und 18, ein zu großer Bremshub auftritt, gelangen die Zapfen 38 vor Beendigung des Bremshubes an den der Traverse 10 zugewandten Enden der Langlöcher 39 zur Anlage. Während des restlichen Bremshubes wird über die Zapfen 38 die Antriebsmutter 37 vom Gabelteil 40 mitgenommen und folgt somit der Bewegung des Bezugsteiles 11, wobei sie über das selbsthemmungsfreie Gewinde 36 die Zwischenwelle 33 in Drehung versetzt. Die Einwegkupplung 34, 35 läuft in dieser Drehrichtung der Zwischenwelle 33 jedoch frei, so daß das Zwischenzahnrad 24 stehen bleibt. Während des nachfolgenden Lösens der Bremse bleibt anfänglich die Zwischenwelle 33 infolge ihrer Reibungen wieder stehen, so daß sich die Zapfen 38 in den Langlöchern 39 in Richtung zu deren der Traverse 10 abgewandten Enden hin verschieben und noch vor Beendigung des Lösevorganges an diesen Enden zur Anlage gelangen. Während des restlichen Lösevorganges nähern sich die Traverse 10 und das Bezugsteil 11 weiter an ; solange jedoch noch die Zugstangen 13, 14 Bremskraft übertragen, vermag die Zwischenwelle 33 die Gewindespindeln 25, 26 nicht zu drehen, die Antriebsmutter 37 verharrt daher in ihrer Lage auf der trotz des auf sie einwirkenden, in Schließrichtung der Einwegkupplung 34, 35 gerichteten Drehmomentes über das Zwischenzahnrad 24 festgehaltenen Zwischenwelle 33 und verschiebt über die Zapfen 38 das Gabelteil 40 unter Spannen der Druckfeder 44 in Richtung zum Gabelstück 42. Erst nach Abklingen der Bremskräfte in den Zugstangen 13 und 14 vermag die Druckfeder 44 das Gabelteil 40 wieder bis zur Anlage am Kopfteil 43 in Richtung zur Traverse 10 hin zu verschieben, wobei über die Zapfen 38 die Antriebsmutter 37 mitgenommen wird und hierbei über das selbsthemmungsfreie Gewinde 36 die Zwischenwelle 33 in Drehung versetzt. Die Drehrichtung entspricht nunmehr der Schließrichtung der Einwegkupplung 34, 35, so daß die Zwischenwelle 33 das Zwischenzahnrad 24 mitnimmt und über dieses die Zahnräder und 33 damit die Gewindespindeln 25 und 26 in Drehung versetzt. Die Drehrichtung der Gewindespindeln 25 und 26 entspricht dabei einem Einschrauben der Gewindespindeln 25 und 26 in die Rohrglieder 29 bzw. 30, so daß die Zugstangen 13 und 14 sich verkürzen. Bei Beendigung des Lösevorganges sind somit die beiden Zugstangen 13 und 14 um einen den Überschußbetrag des Bremshubes gegenüber seinem Sollhub entsprechenden Wert verkürzt ; im übrigen nehmen alle Teile die aus Fig. 5 ersichtlichen Lagen wieder ein.

Die Drehkoppelung der beiden Gewindespindeln 25 und 26 über die Zahnräder 22 und 23 sowie das Zwischenzahnrad 24 gewährleistet stets gleichartige Drehbewegungen an beiden Gewindespindeln 25 und 26, so daß keine voneinander abweichende Längenänderungen an den beiden Zugstangen 13 und 14 auftreten können. Die Zugstangen 13 und 14 weisen somit stets einander entsprechende Längen auf, wodurch ein Verspannen bzw. ein Verklemmen des Bremsgestänges durch ungleiche Längen der Zugstangen 13, 14 ausgeschlossen ist.

Zum Rückstellen, d. h. Verlängern der Zugstangen 13 und 14, wie es beispielsweise beim Austausch verschlissener Bremsklötze 6 und 18 gegen neue Bremsklötze erforderlich ist, kann gemäß Fig. 5 an einem aus dem Gehäuse 20 der Traverse 10 ins Freie ragenden Wellenstummel der Gewindespindel 25 ein Vierkant 45 angeordnet sein, auf welchen ein nicht dargestelltes, von Hand bedienbares Drehwerkzeug aufsetzbar ist, derart, daß die Gewindespindel 25 mit dem Zahnrad 22 und über das Zwischenzahnrad 24 sowie das Zahnrad 23 auch die Gewindespindel 26 von Hand drehbar sind. Um die Gewindespindeln 25 und 26 zur Verlängerung der Zugstangen 13 und 14 in Ausschraubrichtung aus den Rohrgliedern 29 und 30 drehen zu können, ist ein Stillsetzen der Antriebsvorrichtung, also der Zwischenwelle 33 mit der Antriebsmutter 37, erforderlich; hierzu ist es zweckmäßig, die Einwegkupplung 34, 35 in nicht dargestellter, üblicher Weise von Hand lösbar zu gestalten, derart, daß das Zwischenzahnrad 24 und die Zwischenwelle 33 in Sperrrichtung der Einwegkupplung 34, 35 verdrehbar sind. Nach dem Lösen der Einwegkupplung 34, 35 können somit die Gewindespindeln 25 und 26 über den Vierkant 45 von Hand in Verlängerungsrichtung der Zugstangen 13 und 14 gedreht werden. Anstelle der Lösevorrichtung für die Einwegkupplung 34, 35 kann jedoch auch eine Lösevorrichtung für die drehfeste Halterung der Antriebsmutter 37 vorgesehen werden; in einfacher Weise läßt sich solch eine Lösevorrichtung durch aus ihrem Eingriff in die Langlöcher 39 lösbare Gestaltung der Zapfen 38 oder durch eine abtrennbare Ausbildung der Anlenkung des Gabelstückes 42 am Bezugsteil 11 erreichen.

Bei entgegengesetzter Drehung des Vierkantes 45 verkürzen sich die Zugstangen 13, 14 und verkleinert sich somit das Lösespiel der Bremse, die Einwegkupplung 34, 35 muß hierbei nicht von Hand gelöst werden, sondern dreht in ihrer Freigaberichtung durch.

Es ist weiterhin möglich, abweichend zum vorstehend beschriebenen Ausführungsbeispiel im Gewindeeingriff der Antriebsmutter 37 zur Zwischenwelle 33 ein Spiel vorzusehen, welches dem Sollhub der Bremse proportional ist; die Zapfen 38 sind hierbei nur drehbar, nicht aber verschieblich im Gabelteil 40 zu lagern. Die Funktion entspricht im wesentlichen derjenigen des vorstehend beschriebenen Ausführungsbeispiels und braucht daher nicht wiederholt zu werden.

Schließlich ist es möglich, abweichend zu Fig. 1 den Bremshebel 3 in beliebiger Weise andersartig auszugestalten. Beispielsweise kann, ähnlich wie in der DE-B-1 605 283 beschrieben und gezeigt, ein einfacher Bremshebel vorgesehen sein, dessen oberes Ende mit dem Kolben eines Bremszylinders, dessen unteres Ende mit der Traverse 10 und dessen mittlerer Bereich unter Wegfall eines in der genannten DE-AS erwähnten Nachstellers mit dem Bremsklotz 6 verbunden ist. Bei einer derartigen Anordnung kann es zweckmäßig sein, die Anordnung von Lagerbock 21 und Austrittsseite der Zwischenwelle 33, bezogen auf die Traverse 10, zu vertauschen: Das Gehäuse der Traverse 10 befindet sich dann auf der dem Fahrzeugrad abgewandten Seite des Bremshebels und die Zwischenwelle 33 kann über einen geeigneten Drehantrieb mit einem fahrzeugrahmenfesten Teil, beispielsweise einem rahmenfesten Gehäuse einer Bremseinheit, gekuppelt sein.

Zum Schutz der Verschraubungen 25, 27 und 26, 28 ist es zweckmäßig, am Gehäuse 20 Rohransätze 46, 47 anzuordnen, welche gegen Verschmutzung abgedichtet teleskopisch verschiebbar auf den Rohrgliedern 29, 30 gelagert sind, wie es in Fig. 5 dargestellt ist.

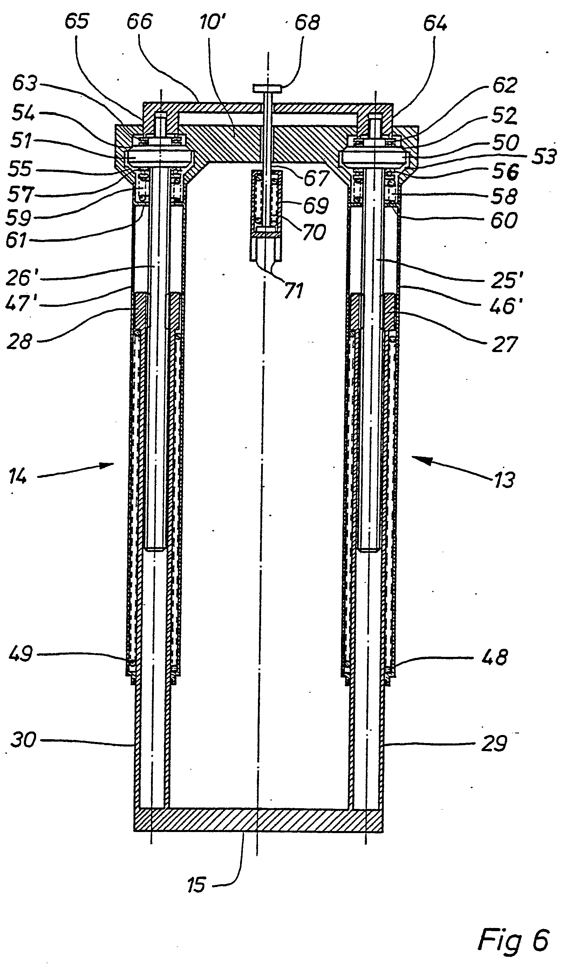

Abweichend zu den vorstehend beschriebenen Ausführungsbeispielen ist es möglich, die Bremseinrichtung auch unter Verwendung bekannter, bewährter Teile für Gestängesteller auszubilden, wie es in Fig. 6 dargestellt ist. Nach Fig. 6 ist die Traverse 10' nahe ihrer beiden Enden mit Rohransätzen 46', 47' versehen, welche die mit der Traverse 15 verbundenen Rohrglieder 29, 30 weit übergreifen und mit ihren Enden auf diesen verschmutzungsgeschützt teleskopisch verschiebbar gelagert sind. Die Muttern 27 und 28 sind über ein selbsthemmungsfreies Gewinde mit den Gewindespindeln 25', 26' verschraubt. Zwischen die der Traverse 10' abgewandten Enden der Rohransätze 46', 47' und die Muttern 27 und 28 sind in einem Ringraum zwischen den Rohransätzen und den Rohrgliedern 29, 30 angeordnete Druckfedern 48, 49 eingespannt. Die Gewindespindeln 25' und 26' sind im Bereich der Traverse 10 mit Kupplungsflanschen 50, 51 versehen, welche beidseitig konische Kupplungsflächen tragen. Den Kupplungsflächen der Kupplungsflansche 50 und 51 stehen Kupplungsflächen 52, 53 bzw. 54, 55 gegenüber, welche einen etwas größeren axialen Abstand als die Kupplungsflächen der Kupplungsflansche 50, 51 aufweisen und welche sich an der Traverse 10' befinden, derart, daß sie Wandungsabschnitte von in den seitlichen Endbereichen der Traverse 10' angeordneten, die Kupplungsflansche 50, 51 aufnehmenden Hohlräumen bilden. Auf Seiten der Traverse 15 sind die Kupplungsflansche 50, 51 über ein Axiallager 56, 57 und eine schwache Feder 58, 59 gegen einen die Gewindespindel 25', 26' umgebenden Ringflansch 60, 61 im Rohransatz 46', 47' abgestützt. Andererseits liegen die Kupplungsflansche 50, 51 über Axiallager 62, 63 an Anschlägen 64, 65 an, welche sich an den Enden eines parallel zur Traverse 10' erstreckenden Hebels 66 befinden. Der Hebel 66 ist in Achsrichtung der Rohransätze 46', 47' parallelverschieblich zur Traverse 10' gelagert. In ihren mittleren Bereichen sind die Traverse 10' und der Hebel 66 von einem zu den Rohransätzen 46', 47' parallel verlaufenden Zuganker 67 durchgriffen, der einerseits mit einem Anschlag 68 endet, welcher dem Hebel 66 auf der der Traverse 10' abgewandten Seite mit einem dem Sollhub der Bremseinrichtung entsprechenden Abstand gegenübersteht. Andererseits greift der Zuganker 67 in eine Federeinrichtung 69 ein, und endet in dieser mit einem Federteller, auf welchem auf der der Traverse 10' zugewandten Seite eine vorgespannte Druckfeder 70 aufsteht. Die Druckfeder 70 ist andererseits gegen das Gehäuse der Federeinrichtung 69 abgefangen, welches über ein Gabelende 71 am in Fig. 6 nicht dargestellten Bezugsteil 11 angelenkt ist.

Bei sofort- und doppeltwirkender Spielraumstellfunktion der Nachstellvorrichtung ist die Vorspannung der Druckfeder 70 größer als die Summe der Vorspannungen der Druckfedern 48 und 49 zu wählen und die Federn 58 und 59 sind jeweils schwächer als die Federn 48 und 49 auszulegen.

Bei gelöster Bremseinrichtung nehmen die Teile die aus Fig. 6 ersichtlichen Lagen ein : Unter der Vorspannung der Federn 48, 49 liegen die den Gewindespindeln 25', 26' abgewandten Kupplungsflächen 52, 54 an den Kupplungsflansch 50, 51 an und halten über diese die Gewindespindeln 25', 26' undrehbar ; die Federn 58, 59 unterstützen diese Anlage. Der Anschlag 68, befindet sich, wie bereits erwähnt, mit einem dem Sollüftspiel der Bremsklötze 6 und 18 entsprechenden Abstand vor dem Hebel 66.

Beim Bremsen bewegen sich, wie bereits beschrieben, die Traverse 10' und das Bezugsteil 11 in entgegengesetzten Richtungen. Befanden sich die Bremsklötze 6 und 18 im richtigen Abstand vor der Lauffläche 19 des Fahrzeugrades 2, so gelangt gerade beim Anlegen der Bremsklötze an die Radlauffläche 19, der Anschlag 68 zur Anlage am Hebel 66. Während der nächsten, kurzen Bremshubphase folgt der Hebel 66 infolge seiner Anlage am Anschlag 68 der Bewegung des Bezugsteiles 11, zugleich wächst jedoch die die Zugstangen 13 und 14 durchsetzende Bremskraft stark an und übersteigt die Vorspannung der Druckfedern 48 und 49. Die beiden Traversen 10' und 15 entfernen sich dabei geringfügig voneinander, wobei über die Muttern 27, 28 die Gewindespindeln 25', 26' mitgenommen werden und die Kupplungsflansche 50, 51 sich von den Kupplungsflächen 52, 54 abheben und gegen die andersseitigen Kupplungsflächen 53, 55 anlegen. Die Gewindespindeln 25', 26' werden daher weiterhin drehfest gehalten. Beim nachfolgenden Festziehen der Bremse wird die über den Bremshebel 3 in die Traverse 10' eingeleitete Bremskraft über die Kupplungsflächen 53, 55 auf die Kupplungsflansche 50, 51, die Gewindespindeln 25', 26', die Muttern 27 und 28 und auf die Traverse 15 übertragen. Die Länge der Zugstangen 13, 14 kann sich hierbei nicht ändern. Während dieser Bewegung wird über die Axiallager 62, 63 und die Anschläge 64, 65 der Hebel 66 von der Traverse 10' mitgenommen und nimmt seinerseits über den Anschlag 68 den Zuganker 67 mit, während sich die mit dem Bezugsteil 11 gekoppelte Federeinrichtung 69 in entgegengesetzter Richtung bewegt. Die Relativbewegung zwischen den beiden Teilen wird durch Kompression der Druckfeder 70 in der Federeinrichtung 69 aufgenommen.

Beim Lösen der Bremseinrichtung spielen sich entsprechend umgekehrte Vorgänge ab.

Falls, beispielsweise durch Verschleiß der Bremsklötze 6 und 18 der Löseabstand der Bremsklötze zur Lauffläche 19 zu Beginn der Bremsung zu groß ist, gelangt während des Bremshubes der Anschlag 68 zur Anlage am Hebel 66, bevor die Bremsklötze 6 und 18 an der Lauffläche 19 anliegen und somit bevor sich eine nennenswerte Bremskraft entwickeln kann. Während der nächsten Bremsphase nimmt daher, wie vorstehend bereits erwähnt, das Bezugsteil 11 über die Federeinrichtung 69, den Zuganker 67 und den Anschlag 68 den Hebel 66 mit, der seinerseits über die Anschläge 64, 65 und die Axiallager 62, 63 die Kupplungsflansche 50, 51 von den Kupplungsflächen 52, 54 abhebt. Die Kupplungsflansche 50, 51 mit den Gewindespindeln 25' und 26' werden daher frei drehbar, und die Druckfedern 48, 49 können sich daher verlängern, wobei sie über die sich in Richtung zur Traverse 10' verschiebenden Muttern 27, 28 die Gewindespindeln 25', 26' in entsprechende Drehung versetzen. Dieser eine Verkürzung der Zugstangen 13, 14 bewirkende Vorgang hält an, bis die Bremsklötze 6, 18 zur Anlage an der Lauffläche 19 gelangen. Die sodann rasch ansteigende, die Zugstangen 13, 14 durchsetzende Bremskraft überwindet die Vorspannung der Druckfedern 48, 49, wodurch, unterstützt durch die weitere Bewegung des Bezugsteiles 11 und des mit diesem gekoppelten Hebels 66, die Kupplungsflansche 50, 51 an die Kupplungsflächen 53, 55 angedrückt werden. Die Gewindespindeln 25', 26' werden somit wieder drehfest gehalten und der weitere Bremsvorgang läuft bei im weiteren konstant gehaltener Länge der Zugstangen 13, 14, wie vorstehend beschrieben, ab. Nach dem Lösen der Bremsen heben sich Bremsklötze 6, 18 nur um den Sollhub von der Lauffläche 19 ab.

Falls das Lösespiel der Bremsklötze 6, 18 zu Beginn der Bremsung zu klein ist, gelangen die Bremsklötze 6, 18 bereits zur Anlage an der Lauffläche 19, bevor sich der Anschlag 68 an den Hebel 66 anlegt. Die sodann rasch ansteigende, durch die Zugstangen 13, 14 zu übertragende Bremskraft überwindet die Vorspannung der Druckfedern 48, 49, die Traversen 10' und 15 entfernen sich geringfügig voneinander, wobei über die Muttern 27, 28 die Gewindespindeln 25', 26' mitgenommen werden und die Kupplungsflansche 50, 51 sich von den Kupplungsflächen 52, 54 abheben. Die Gewindespindeln 25', 26' werden hierdurch drehbar, und bei einer weiteren Hubbewegung der Traverse 10' führen die Federn 58, 59 die Gewindespindeln 25', 26' unter deren Ausschrauben aus den Rohrgliedern 29, 30 der Bewegung der Traverse 10' nach. Die Zugstangen 13, 14 verlängern sich hierbei. Sobald der Anschlag 68 zur Anlage am Hebel 66 gelangt, drücken die Anschläge 64, 65 über die Axiallager 62, 63 die Kupplungsflansche 50, 51 gegen die Kupplungsflächen 53, 55, wodurch die Gewindespindeln 25', 26' wieder drehfest gehalten werden. Damit ist der Nachstellvorgang beendet und die Zugstangen 13, 14 behalten für den restlichen Bremsvorgang ihre erreichte Länge bei. Während des folgenden Bremshubes nimmt die Traverse 10' über die Kupplungsflansche 50, 51, die Gewindespindeln 25', 26', die Muttern 27, 28 und die Rohrglieder 29, 30 die Traverse 15 mit, so daß der Bremshub über den zweiten Bremshebel 17 auf den zweiten Bremsklotz 18 übertragen wird und dieser an die Lauffläche 19 angepreßt wird. Auch der Hebel 16 mit dem Anschlag 68 und dem Zuganker 67 folgen der Bewegung der Traverse 10', wobei die Druckfeder 70 der Federeinrichtung 69 komprimiert wird. Das nachfolgende Lösen der Bremsen erfolgt in normaler Weise, und bei Erreichen des Lösezustandes befinden sich die Bremsklötze 6 und 18 im Sollabstand vor der Lauffläche 19.

Bei diesem Ausführungsbeispiel der Bremseinrichtung gewährleistet die gemeinsame, die Federeinrichtung 69 mit der Druckfeder 70, den Zuganker 67 mit dem Anschlag 68 und den Hebel 66 umfassende Steuereinrichtung für die beiden die Gewindespindeln 25' und 26', die Muttern 27 und 28 und die Druckfedern 48 und 49 umfassenden Längenverstelleinrichtungen der beiden Zugstangen 13 und 14 eine stets gleichmäßige Betätigung dieser Längenverstelleinrichtungen. Hierdurch wird gewährleistet, daß sich die Zugstangen 13, 14 während Nachstellvorgängen stets gleichmäßig ändern und somit sich nicht auf voneinander abweichende Längenwerte einstellen können. Die einander stets gleiche Länge der Zugstangen 13 und 14 gewährleistet eine gleichmäßig verteilte Übertragung der Bremskräfte von der Traverse 10' über die Zugstangen 13, 14 auf die Traverse 15, wodurch unerwünschte Verspannungen und Drehmomente in der Bremseinrichtung vermieden werden.

Falls beim Ausführungsbeispiel der Bremseinrichtung nach Fig. 6 keine sofortwirkende, sondern eine erst während des Lösehubes nach einer Bremsung eintretende Nachstellfunktion erwünscht ist, müssen lediglich die Federabstimmungen geändert werden : Um diese Funktionsweise zu erzielen, muß die Summe der Vorspannungen der Druckfedern 48 und 49 größer sein als die Vorspannung der Druckfeder 70, ein zu großes Lösespiel der Bremsklötze 6 und 18 zur Lauffläche 19 wird dann während des Bremsvorganges als zusätzlicher Kompressionshub der Druckfeder 70 gespeichert, und erst während des Lösevorganges, beim Abklingen der Bremskraft, bewirkt die Entspannung der Druckfeder 70 den Nachstellvorgang. Weiterhin ist es möglich, ausgehend von dem Ausführungsbeispiel nach Fig. 6, durch Entfernen der Federn 58, 59 eine einfachwirkende Nachstellfunktion der Nachstellvorrichtung zu erreichen. Die Wirkungsweisen von Nachstellvorrichtungen in diesen geänderten Ausführungsformen ist prinzipiell bekannt und kann anhand der vorstehenden, ausführlichen Erläuterung der Funktionsweise der Ausführungsart nach Fig. 6 ohne weiteres für die abgewandelten Formen abgeleitet werden, so daß sich weitere Ausführungen hierzu erübrigen.

Selbstverständlich ist es auch möglich, abweichend zu den vorstehend beschriebenen Ausführungen andersartige, bekannte Nachstellvorrichtungen vorzusehen, wobei nur wesentlich ist, daß eine gemeinsame, an der Traverse 10 anzuordnende Steuer- bzw. Betätigungsvorrichtung für zwei, in die beiden Zugstangen 13 und 14 verteilt einzuordnende Längenverstellvorrichtungen vorzusehen ist.

Beim Ausführungsbeispiel nach Fig. 6 kann das Rückstellen der Nachstellvorrichtung beim Wechseln verschlissener gegen neue Bremsklötze im gelösten Zustand der Bremseinrichtung durch kräftiges Auseinanderziehen der beiden Traversen 10' und 15, beispielsweise vermittels einer zwischen die Radlauffläche 19 und den Bremsklotz 18 eingeführten und diese auseinanderspreizenden Brechstange, erfolgen. Nach Überwinden der Vorspannung der Druckfedern 48 und 49 verlängern sich hierbei die Zugstangen 13 und 14 durch Ausschrauben der Gewindespindeln 25' und 26' unter dem Einfluß der Federn 58 und 59.

Bezugszeichenliste

| | | |
|---|---|---|
| 1 | | Fahrzeugrahmen |
| 2 | | Fahrzeugrad |
| 3 | | erster Bremshebel |
| 4 | | Hebel |
| 5 | | Bremszylinder |
| 6 | | erster Bremsklotz |
| 7 | | Lagerbock |
| 8 | | Hebel |
| 9 | | Kolben |
| 10 | | Traverse |
| 10' | | Traverse |
| 11 | | Bezugsteil |
| 12 | | Federeinrichtung |
| 13 | | Zugstange |
| 14 | | Zugstange |
| 15 | | Traverse |
| 16 | | Lagerung |
| 17 | | zweiter Bremshebel |
| 18 | | zweiter Bremsklotz |
| 19 | | Lauffläche |
| 20 | | Gehäuse |
| 21 | | Lagerbock |
| 22 ; 23 | | Zahnrad |
| 24 | | Zwischenzahnrad |
| 25 ; 26 | | Gewindespindel |
| 25' ; 26' | | Gewindespindel |
| 27 ; 28 | | Mutter |
| 29 ; 30 | | Rohrglied |
| 25 ; 27 | | Verschraubung |
| 26 ; 28 | | Verschraubung |
| 31 ; 32 | | Lagerung |
| 33 | | Zwischenwelle |
| 34 | | Klinkenrad |
| 35 | | Klinke |
| 34 ; 35 | | Einwegkupplung |
| 36 | | Gewinde |
| 37 | | Antriebsmutter |
| 38 | | Zapfen |
| 39 | | Langloch |
| 40 | | Gabelteil |
| 41 | | Vierkantbolzen |
| 42 | | Gabelstück |
| 43 | | Kopfteil |
| 44 | | Druckfeder |
| 45 | | Vierkant |
| 46 ; 47 | | Rohransatz |
| 46' ; 47' | | Rohransatz |
| 48 ; 49 | | Druckfeder |
| 50 ; 51 | | Kupplungsflansch |
| 52 ; 53 | | Kupplungsfläche |

54 ; 55    Kupplungsfläche

56 ; 57    Axiallager

58 ; 59    Feder

60 ; 61    Ringflansch

62 ; 63    Axiallager

64 ; 65    Anschlag

66         Hebel

67         Zuganker

68         Anschlag

69         Federeinrichtung

70         Druckfeder

71         Gabelende

**Ansprüche**

1. Bremseinrichtung für Schienenfahrzeuge, mit einer einerseits eines Fahrzeugrades angeordneten Bremseinheit mit einem an die Lauffläche des Fahrzeugrades (2) anpreßbaren, ersten Bremsklotz (6) und einem im wesentlichen vertikal angeordneten, unter einer Reaktionskraft zur Anpreßkraft des Bremsklotzes drehbaren, ersten Bremshebel (4), dessen unteres Ende gelenkig mit den Enden zweier im wesentlichen horizontal in zur Ebene des Fahrzeugrades parallelen Ebenen verlaufenden, das Fahrzeugrad überkreuzenden und zwischen sich einschließenden Zugstangen (13, 14) angelenkt ist, deren andere Enden am unteren Ende eines bezogen auf das Fahrzeugrad gegenüberliegend zum ersten Bremshebel angeordneten, zweiten Bremshebels (17) angelenkt sind, der mit einem etwa gegenüberliegend zum ersten Bremsklotz an die Lauffläche des Fahrzeugrades anpreßbaren Bremsklotz (18) verbunden ist, mit wenigstens einer die beiden Zugstangen miteinander verbindenden Traverse (10, 10') und mit einer selbsttätigen Nachstellvorrichtung für das Lösespiel der Bremsklötze, die wenigstens eine Verschraubung, umfassend eine Gewindespindel und eine mit dieser verschraubte Mutter, und eine Steuervorrichtung für das Drehen eines der Verschraubungsglieder Gewindespindel oder Mutter aufweist, dadurch gekennzeichnet, daß jede der beiden Zugstangen (13, 14) eine Verschraubung (Mutter 27, 28 und Gewindespindel 25, 26 bzw. 25', 26') aufweist und daß an der Traverse (10 bzw. 10') eine gemeinsame Steuervorrichtung für beide Verschraubungen angeordnet ist.

2. Bremseinrichtung nach Anspruch 1, dadurch gekennzeichnet, daß die beiden drehbaren Verschraubungsglieder (Gewindespindel 25 bzw. 26) mittels eines an der Traverse (10) angeordneten Getriebes drehfest miteinander gekoppelt sind.

3. Bremseinrichtung nach Anspruch 2, dadurch gekennzeichnet, daß das Getriebe je ein mit den drehbaren Verschraubungsgliedern (Gewindespindel 25 bzw. 26) verbundenes Zahnrad (22 bzw. 23) und ein mit diesen kämmendes Zwischenzahnrad (24) aufweist, und daß die Steuervorrichtung mit dem Zwischenzahnrad (24) gekuppelt ist.

4. Bremseinrichtung nach Anspruch 3, dadurch gekennzeichnet, daß die beiden Verschraubungen (25, 27 und 26, 28) selbsthemmend ausgebildet sind, daß das Zwischenzahnrad (24) über eine Einwegkupplung (34, 35) mit einer Zwischenwelle (33) gekoppelt ist, und daß die Zwischenwelle (33) über einen Axialverschiebungen zwischen ihr und einem Bezugsteil (11) in Drehbewegungen der Zwischenwelle (33) umsetzenden Drehantrieb mit dem Bezugsteil (11) gekoppelt ist.

5. Bremseinrichtung nach Anspruch 4, dadurch gekennzeichnet, daß die Einwegkupplung (34, 35) einen dem Sollhub entsprechenden Totgang aufweist.

6. Bremseinrichtung nach Anspruch 4, dadurch gekennzeichnet, daß der Drehantrieb einen dem Sollhub entsprechenden Totgang aufweist.

7. Bremseinrichtung nach Anspruch 5 oder 6, dadurch gekennzeichnet, daß mit der Zwischenwelle (33) über ein selbsthemmungsfreies Gewinde (36) eine drehfest gehaltene, mit dem Bezugsteil (11) gekoppelte Antriebsmutter (37) verschraubt ist.

8. Bremseinrichtung nach Anspruch 6 und 7, dadurch gekennzeichnet, daß die Antriebsmutter (37) über eine ein dem Sollhub entsprechendes Spiel aufweisende Anschlagvorrichtung (Zapfen 38, Langloch 39) und ein vorgespanntes Federglied (Druckfeder 44) mit dem Bezugsteil (11) gekoppelt ist.

9. Bremseinrichtung nach Anspruch 4, dadurch gekennzeichnet, daß die Einwegkupplung (34, 35) lösbar und das Zwischenzahnrad (24) mittel- oder unmittelbar von Hand drehbar ausgebildet ist.

10. Bremseinrichtung nach Anspruch 1, gekennzeichnet durch die Kombination der Merkmale, daß

a) die Verschraubungen (27, 25' und 28, 26') beider Zugstangen (13, 14), wie insgesamt an sich bekannt, selbsthemmungsfrei ausgebildet sind, das drehbare Verschraubungsglied (Gewindespindel 25' bzw. 26') einen Kupplungsflansch (50 bzw. 51) trägt, dem beidseitig an einem undrehbaren Teil (Traverse 10') angeordnete Kupplungsflächen (52 und 53 bzw. 54 und 55) gegenüberstehen, das drehbare Verschraubungsglied (Gewindespindel 25' bzw. 26') in Richtung der zu übertragenden Bremskraft federbelastet (Feder 58 bzw. 59) ist und mit einem nach einem Sollhub entgegen der Federbelastung wirksamen, federnden Anschlag zusammenwirkt und das andere, undrehbare Verschraubungsteil (Mutter 27 bzw. 28) in Richtung der zu übertragenden Bremskraft federbelastet (Druckfeder 48 bzw. 49) ist,

b) der federnde Anschlag einen an der Traverse (10') relativ verschieblich zu dieser gelagerten Hebel (66) aufweist, dessen Enden mit den drehbaren Verschraubungsgliedern (Gewindespindeln 25' und 26') beider Zugstangen (13 und 14) und dessen mittlerer Bereich über eine vorgespannte Federeinrichtung (69) mit einem Bezugsteil (11) in Eingriff bringbar sind.

11. Bremseinrichtung nach Anspruch 10, dadurch gekennzeichnet, daß jede der beiden Zugstangen (13, 14) zwei teleskopisch zueinander verschiebliche Rohrglieder (29, 30 und Rohransatz 46', 47') aufweist, deren einander abgewandte Enden mit je einer an einem der Bremshebel (3 bzw. 17) angelenkten Traverse (10' bzw. 15) verbunden sind, daß das andere Ende des jeweils inneren Rohrgliedes (29 bzw. 30) fest mit einer Mutter (27 bzw. 28) verbunden ist, daß die mit der Mutter (27 bzw. 28) verschraubte Gewindespindel (25' bzw. 26') einerseits beweglich im inneren Rohrglied (29 bzw. 30) geführt ist und andererseits den Kupplungsflansch (50 bzw. 51) trägt, daß die Kupplungsflächen (52, 53 und 54, 55) an den Endbereichen der den Hebel (66) aufweisenden Traverse (10') angeordnet sind, und daß dem Hebel (66) in dessen mittleren Bereich mit dem Sollabstand ein Anschlag (68) gegenübersteht, der über die vorgespannte Federeinrichtung (69) am Bezugsteil (11) angelenkt ist.

## Claims

1. Braking device for rail vehicles with a braking unit disposed on one side of a vehicle wheel with a first brake shoe (6) that can be pressed against the contact surface of the vehicle wheel (2), and a first brake lever (4) arranged substantially vertically and rotatable under torque for the contact pressure of the brake shoe, the lower end of which brake lever is flexibly articulated to the ends of two pull rods (13, 14) running substantially horizontally in planes parallel to the plane of the vehicle wheel, overlapping the vehicle wheel and enclosing it between them, the other ends of which are articulated at the lower end of a second brake lever (17) arranged to be opposite the first brake lever with respect to the vehicle wheel, which second brake lever is connected to a brake shoe (18) that is approximately opposite the first brake shoe and can be pressed onto the contact surface of the vehicle wheel, with at least one crosspiece (10, 10') connecting the two pull rods and with an automatic adjusting device for the release play of the brake shoes, which has at least one screw coupling incorporating a threaded spindle and a nut screwed to this, and a control device for turning one of the screwing elements, threaded spindle or nut, characterised in that each of the two pull rods (13, 14) has a screw coupling (nut 27, 28 and threaded spindle 25, 26 or 25', 26') and that on the crosspiece (10 or 10') there is arranged a common control device for both screw couplings.

2. Braking device according to claim 1, characterised in that the two rotatable screwing elements (threaded spindle 25 or 26) are coupled to one another by means of a gear unit arranged on the crosspiece (10).

3. Braking device according to claim 2, characterised in that the gear unit has a gear wheel (22 or 23) connected to the rotatable screwing elements (threaded spindle 25 or 26), and an intermediate gear wheel (24) meshing with these, and that the control device is coupled to the intermediate gear wheel (24).

4. Braking device according to claim 3, characterised in that the two screw couplings (25, 27 and 26, 28) are constructed to be self-locking, that the intermediate gear wheel (24) is coupled by means of a one-way coupling (34, 35) to an intermediate shaft (33) and that the intermediate shaft (33) is coupled to a reference part (11) by means of a rotary drive reversing axial shifting movements between it and the reference part (11) into rotary movements of the intermediate shaft (33).

5. Braking device according to claim 4, characterised in that the one-way coupling (34, 35) has a free travel corresponding to the desired lift.

6. Braking device according to claim 4, characterised in that the rotary drive has a free travel corresponding to the desired lift.

7. Braking device according to claim 5 or 6, characterised in that by means of a self-locking thread (36) a fixedly held drive nut (37) coupled to the reference part (11) is screwed to the intermediate shaft (33).

8. Braking device according to claim 6 and 7, characterised in that the drive nut (37) is coupled to the reference part (11) by means of an arresting device (pin 38, slot 39) having a clearance corresponding to the desired lift, and a prestressed spring member (pressure spring 44).

9. Braking device according to claim 4, characterised in that the one-way coupling (34, 35) is constructed to be releasable and the intermediate gear wheel (24) is made to be indirectly or directly rotatable by hand.

10. Braking device according to claim 1, characterised by the combination of the features that

a) the screw couplings (27, 25' and 28, 26') of both pull rods (13, 14), as known completely per se, are constructed to be free of self-locking, the rotatable screwing member (threaded spindle 25' or 26') carries a coupling flange (50 or 51), opposite which on both sides are coupling surfaces (52 and 53 or 54 and 55) arranged on a non-rotatable part (crosspiece 10'), the rotatable screwing member (threaded spindle 25' or 26') is spring loaded (spring 58 or 59) in the direction of the brake force to be transmitted and co-operates with a flexible stop piece that works against the spring loading according to a desired lift, and the other, non-rotatable screwing part (nut 27 or 28) is spring loaded (pressure spring 48 or 49) in the direction of the braking force to be transmitted,

b) the flexible stop piece has, mounted relatively displaceably to this on the crosspiece (10'), a lever (66) whose ends can be brought into engagement with the rotatable screwing elements (threaded spindles 25' and 26') of both pull rods (13 and 14) and whose middle region can be brought into engagement with a reference part (11) by means of a prestressed spring device (69).

11. Braking device according to claim 10, characterised in that each of the two pull rods (13, 14) has two tube members (29, 30 and socket 46', 47') that are displaceable telescopically to one another, whose ends turned away from each other are connected respectively to a crosspiece (10' or 15) articulated on one of the brake levers (3 or 17), in that the other end of the respective inner tube member (29 or 30) is connected rigidly to a nut (27 or 28), in that the threaded spindle (25' or 26') screwed to the nut (27 or 28) is guided on the one hand movably in the inner tube member (29 or 30) and on the other hand carries the coupling flange (50 or 51), in that the coupling surfaces (52, 53 and 54, 55) are arranged on the end regions of the crosspiece (10') having the lever (66), and in that a stop piece (68) faces the lever (66) in its middle region with the desired clearance, which stop piece is articulated by means of the prestressed spring device (69) on the reference part (11).

**Revendications**

1. Installation de freinage pour véhicules sur rails, avec une unité de freinage disposée sur un côté d'une roue du véhicule et comportant un premier sabot de frein (6) susceptible d'être pressé contre la surface de roulement de la roue du véhicule (2) et un premier levier de frein (4) disposé sensiblement verticalement, susceptible de tourner sous l'action de la force de réaction par rapport à la force d'application du sabot de frein et dont l'extrémité inférieure est articulée avec les extrémités de deux tiges de traction (13, 14) s'étendant sensiblement horizontalement dans des plans parallèles au plan de la roue du véhicule, croisant la roue du véhicule et l'enfermant entre elles, les deux autres extrémités des tiges de traction étant articulées à l'extrémité inférieure d'un second levier de frein (17) situé en face du premier levier de frein par rapport à la roue du véhicule et étant relié à un sabot de frein (18) susceptible d'être appliqué contre la surface de roulement de la roue du véhicule, et situé à peu près en face du premier sabot de frein, avec au moins une traverse (10, 10') reliant les deux tiges de traction, et avec un dispositif de réajustage automatique du jeu au desserrage des sabots de frein, qui comporte au moins une liaison filetée comprenant une broche filetée et un écrou vissé sur celle-ci, ainsi qu'un dispositif de commande pour la rotation de l'un des éléments de la liaison filetée -broche filetée ou écrou-, caractérisée par le fait que chacune des deux tiges de traction (13, 14) comporte une liaison filetée (écrous 27, 28 et broches filetées 25, 26 ou 25', 26'), et que sur la traverse (10, 10') est disposé un dispositif de commande commun pour les deux liaisons filetées.

2. Installation de freinage selon la revendication 1, caractérisée par le fait que les deux éléments tournants (broches filetées 25 et 26) de la liaison filetée sont accouplés entre eux en rotation à l'aide d'une transmission disposée sur la traverse.

3. Installation de freinage selon la revendication 2, caractérisée par le fait que la transmission comporte des pignons (22 et 23) reliés respectivement aux éléments tournants (broches filetées 25 et 26) de la liaison filetée, ainsi qu'une roue dentée intermédiaire (24) engrénant avec lesdits pignons, et que le dispositif de commande est accouplé à la roue dentée intermédiaire.

4. Installation de freinage selon la revendication 3, caractérisée par le fait que les deux liaisons filetées (25, 27 et 26, 28) sont réalisées à auto-blocage, que la roue dentée intermédiaire (24) est accouplée à un arbre intermédiaire (33) par l'intermédiaire d'un accouplement unidirectionnel (34, 35), et que l'arbre intermédiaire (33) est accouplé, par l'intermédiaire d'une commande en rotation qui transforme des déplacements axiaux entre l'arbre intermédiaire et un élément de référence (11) en mouvements de rotation de l'arbre intermédiaire, à l'élément de référence (11).

5. Installation de freinage selon la revendication 4, caractérisée par le fait que l'accouplement unidirectionnel (34, 35) comporte une course à vide qui correspond à la course de consigne.

6. Installation de freinage selon la revendication 4, caractérisée par le fait que la commande en rotation comporte une course à vide qui correspond à la course de consigne.

7. Installation de freinage selon la revendication 5 ou 6, caractérisée par le fait qu'avec l'arbre intermédiaire (33) est vissé, par l'intermédiaire d'un filetage non auto-bloquant (36), un écrou d'entraînement (37) empêché de tourner et accouplé à l'élément de référence (11).

8. Installation de freinage selon la revendication 6 et 7, caractérisée par le fait que l'écrou d'entraînement (37) est accouplé à l'élément de référence (11) par l'intermédiaire d'un dispositif à butée (cheville 38, boutonnière 39) présentant un jeu qui correspond à la course de consigne et d'un élément élastique préarmé (ressort de pression 44).

9. Installation de freinage selon la revendication 4, caractérisée par le fait que l'accouplement unidirectionnel (34, 35) est réalisé de façon à pouvoir être désaccouplé et la roue dentée intermédiaire (24) est susceptible d'être entraînée en rotation, indirectement ou directement, à la main.

10. Installation de freinage selon la revendication 1, remarquable par la combinaison des caractéristiques que :
a) les liaisons filetées (27, 25' et 28, 26') des deux tiges de traction (13, 14) sont, de manière généralement connue, réalisées de façon non auto-bloquante, l'élément tournant de la liaison filetée (broche filetée 25' ou 26') porte un flasque d'accouplement (50, 51) en face duquel se trouvent des surfaces d'accouplement (52 et 53 ou 54 et 55) disposées sur les deux côtés d'un élément (traverse 10') empêché de tourner, l'élément tournant (broches filetées 25' et 26') de la liaison filetée est chargé élastiquement (ressort 58 ou 59) en direction de la force de freinage à

transmettre et coagit avec une butée élastique, à l'encontre de la charge du ressort, après une course de consigne, et l'autre élément (écrous 27, 28) de la liaison filetée, empêché de tourner, est chargé élastiquement (ressorts de pression 48, 49) dans la direction de la force de freinage à transmettre,

b) la butée élastique comporte un levier (66) monté sur la traverse (10') et susceptible de coulisser par rapport à cette dernière, les extrémités de ce levier étant susceptibles d'être amenées en prise avec les éléments tournants (broches filetées 25' et 26') de la liaison filetée des deux tiges de traction (13 et 14), alors que sa partie médiane est susceptible d'être amenée en prise avec un élément de référence (11), par l'intermédiaire d'un dispositif élastique préarmé (69).

11. Installation de freinage selon la revendication 10, caractérisée par le fait que chacune des tiges de traction (13, 14) comporte deux éléments tubulaires (29, 30) et appendice tubulaire (46', 47') mobiles entre eux de manière télescopique et dont les extrémités éloignées entre elles sont chacune reliées à une traverse (10', 15) articulée à l'un des leviers de frein (3, 17), que l'autre extrémité de l'élément tubulaire (29, 30) est solidaire d'un écrou (27, 28), que la broche filetée (25', 26') vissée à l'écrou (27, 28) est, d'une part, guidée de façon mobile à l'intérieur de l'élément tubulaire (29, 30) et porte, d'autre part, le flasque d'accouplement (50, 51), que les surfaces d'accouplement (52, 53 et 54, 55) sont disposées dans les zones d'extrémité de la traverse (10') comportant le levier (66) et qu'en face du levier (66), dans sa partie médiane et avec une distance de consigne, se situe une butée (68) qui est articulée à l'élément de référence (11) par l'intermédiaire du dispositif élastique préarmé (69).

0 036 001

Fig 1

Fig 2

*Fig 3*

35

22        34        24        33        23

33        10        20

26

30        25

29        *Fig 4*

Fig 5

Fig 6

4